# EUROPEAN PATENT APPLICATION

(11) **EP 4 818 932 A1**
(43) Date of publication of application: **07.10.2026**
(21) Application number: 26163920.7
(22) Date of filing: 11.03.2026
(51) Int. Cl.: G06F 16/957

(54) **CONTEXT-AWARE BROWSER FEATURE RECOMMENDATIONS**

(30) Priority: 13.03.2025 US 202519078744
(71) Applicant: Microsoft Technology Licensing, LLC, Redmond, Washington 98052-6399 (US)
(72) Inventor: Miller, Kyle Matthew, Redmond, 98052-6399 (US); Johansen, Lia Xian, Redmond, 98052-6399 (US); Ragunathan, Hariharan, Redmond, 98052-6399 (US)
(74) Representative: Murgitroyd & Company

(57) **Abstract**

The present systems and methods enable a web browser to recommend or present features to a user based on the content of a web page. The features, which may include various actions that can be taken and different display configurations for viewing the content of the web page, may be specific to the type(s) of content that are present on the web page. Furthermore, such features may be presented to the user upon detection of a trigger that indicates an intent to arrange or configure a tab of the browser. Such features may be presented as transient graphical elements that illustrate the feature.

## Description

### BACKGROUND

Web browsers are computing applications that provide access to the World Wide Web via the Internet. When a user requests a web page from a particular website, such as by sending a request with a Uniform Resource Locator (URL), the web browser retrieves the related content from a web server and displays the web page on the user's device. Web browsers may access web pages that include various types of content, including video media, audio media, text and images, e-commerce applications, messaging applications, among others.

It is with respect to these and other considerations that examples have been made. In addition, although relatively specific problems have been discussed, it should be understood that the examples should not be limited to solving the specific problems identified in the background.

### SUMMARY

This summary is provided to introduce a selection of concepts in a simplified form that are further described below in the Detailed Description section. This summary is not intended to identify key features or essential features of the claimed subject matter, nor is it intended as an aid in determining the scope of the claimed subject matter.

The present technology relates to systems and methods that implement a framework for providing context-aware browser feature recommendations. While browsing the internet using a web browser, users may encounter various types of content and/or applications. Traditionally, web pages are presented in browser tabs in a browser application window regardless of the type of content present on the web page. The web browser may have various features that can provide an improved experience or alternative ways for a user to view or interact with the content and/or applications. The browser may have different features for different types of content.

The present systems and methods enable a web browser to recommend or present such features to a user based on the content of a web page. The features, which may include various actions that can be taken and different display configurations for viewing the content of the web page, may be specific to the types of content that are present on the web page. Furthermore, such features may be presented to the user upon detection of a trigger that indicates an intent to arrange or configure a tab of the browser. Such features may be presented as transient graphical elements that illustrate the feature.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

The accompanying drawings, which are incorporated in and constitute a part of this disclosure, illustrate various aspects of the present invention. In the drawings:
FIG. 1A depicts a first example of a display of a desktop in which an input to take action on a browser tab is detected, in accordance with one or more examples.
FIG. 1B depicts a first example of a display of a desktop in which an input indicative of interest in a graphical element representing a first browser action is detected, in accordance with one or more examples.
FIG. 1C depicts a first example display of a desktop in which an input indicative of a section of a graphical element representing a first browser action is detected, in accordance with one or more examples.
FIG. 2A depicts a second example of a display of a desktop in which an input to take action on a browser tab is detected, in accordance with one or more examples.
FIG. 2B depicts a second example of a display of a desktop in which an input indicative of interest in a graphical element representing a second browser action is detected, in accordance with one or more examples.
FIG. 2C depicts a second example display of a desktop in which an input indicative of a section of a graphical element representing a first browser action is detected, in accordance with one or more examples.
FIG. 3A depicts a third example of a display of a desktop in which an input to take action on a browser tab is detected, in accordance with one or more examples.
FIG. 3B depicts a third example of a display of a desktop in which an input indicative of interest in a graphical element representing a first browser action is detected, in accordance with one or more examples.
FIG. 3C depicts a third example display of a desktop in which an input indicative of a section of a graphical element representing a first browser action is detected, in accordance with one or more examples.
FIG. 4 depicts an example system for implementing a framework for providing context-aware browser action recommendations.
FIG. 5 depicts an example method for utilizing a framework for providing context-aware browser action recommendations.
FIG. 6 depicts an example method for utilizing a framework for providing context-aware browser configuration recommendations.
FIG. 7 depicts an example method for utilizing a framework for providing context-aware browser configuration recommendations.
FIG. 8 is a block diagram illustrating example physical components of a computing device with which aspects of the technology may be practiced.

### DETAILED DESCRIPTION

The following detailed description refers to the accompanying drawings. Wherever possible, the same reference numbers are used in the drawing and the following description to refer to the same or similar elements. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the technology, but instead, the proper scope of the technology is defined by the appended claims. Examples may take the form of a hardware implementation, or an entirely software implementation, or an implementation combining software and hardware aspects. The following detailed description is, therefore, not to be taken in a limiting sense.

In some examples, a web browser provides context-aware browser feature recommendations, such as actions and content display configurations. In such a web browser, when an input (e.g., drag) or interaction that is indicative of an intent to take action on a tab of the web browser is received, graphical elements illustrating applicable actions appear on screen. The graphical elements represent various actions and browser configurations that can be applied to the web page of the tab. The graphical elements and corresponding actions or configurations that are presented may be different depending on the type of content in the web page. For example, if the web page includes a video, one of the graphical elements that is presented may represent a configuration to play the video in a mini multimedia player outside of the main browser window, whereas such an option would not be presented if the web page does not include any video media. The tab may be dragged to and released onto a graphical element to select the corresponding action or configuration. In some examples, a transient preview of the action or configuration may be displayed when the tab is dragged and hovered over the graphical element before it is released.

In some examples, the graphical elements and corresponding actions or configurations that are presented for a particular web page may be based on various contextual information related to the web page. In some examples, the graphical elements and corresponding actions or configurations that are presented may be further refined or customized based on historical user behavior.

The present techniques enable the web browser to more efficiently anticipate a user's intention with fewer inputs and provide content in a more computationally efficient manner. Thus, the techniques of the present disclosure extend the functionalities and capabilities of web browser technologies and the computer systems on which they operate.

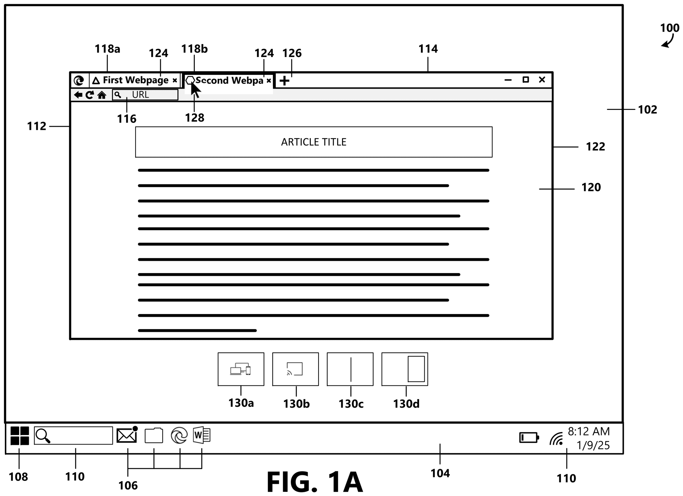

FIG. 1A depicts an example operating system desktop 100 of a computing device, such as a personal computer or tablet. The desktop 100 provides a graphical user interface (GUI) for interacting with applications, folders, files, and various other types of content. The desktop 100 further provides access to features and functionalities of the computing device and its operating system. For instance, the desktop 100 includes a workspace 102 that serves as a primary area or surface for a user to interact with and arrange applications and files, access other functionalities of the computing system, and the like. The desktop 100 may further include a taskbar 104 that displays currently running and/or pinned application indicators 106 and a start button 108 that provides access to various system features, settings, shortcuts to frequently used applications, etc. The depicted taskbar 104 includes additional features 110, such as a system clock, volume control, network connectivity, battery status, and a search button or bar. In some examples, system notifications (e.g., incoming messages or updates) are displayed in or expanded from the taskbar 104. In some examples, the taskbar 104 is not considered to be a part of the workspace 102 (e.g., application windows may not overlap or occlude the taskbar 104).

The illustrated desktop environment includes an open web browser 112. The web browser 112 may include a main browser application window 114 that provides a user interface including various features and components of the web browser 112. The web browser application window 114 may include a search or uniform resource locator (URL) bar 116. The URL bar 116 includes an input element that receives a search query or the URL of a web page. If the input to the URL bar 116 is detected to be a URL, then the web browser 112 opens the web page associated with the URL. If the input to the URL bar 116 is detected to be a search query (e.g., not a URL), then the web browser 112 accesses a default search engine or service, provides the search query, and returns the results page of the search engine as the web page displayed in the web browser 112. The web browser application window 114 also includes other user interface elements, such as a back, reload, and home button for navigating, manipulating, or otherwise utilizing the web browser 112. The web browser 112 may be moved around on the desktop 100 and positioned in various configurations, such as taking up the entire workspace of the desktop or a portion of the workspace as shown in FIG. 1A.

The web browser 112 further includes browser tabs 118a and 118b (collectively referred to as 118), also referred to simply as tabs 118. Browser tabs 118 correspond to web pages 120 that are open in the web browser 112. The interface of the web browser 112 further includes an interface element for opening a new tab 118 in the web browser application window 114, such as a new-tab button 126. The example web browser 112 in FIG. 1A has two tabs 118 open which corresponds to two web pages 120 that are open in the web browser 112 (only one of which is visible). In some examples, each tab 118 includes a content region 122 and a title bar 124. The content region 122 displays the web page 120 and the title bar 124 displays a title or other identifier associated with web page 120.

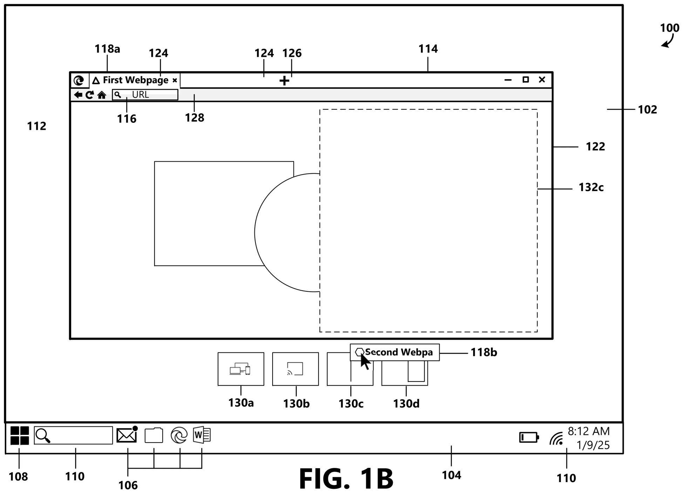

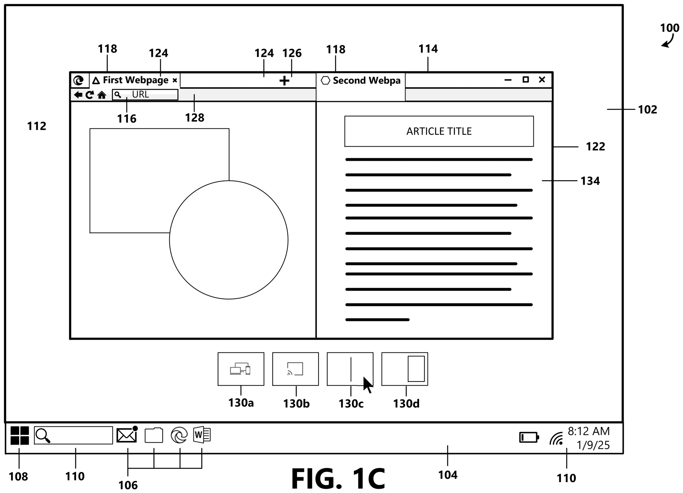

A tab 118 may be considered active when the content region 122 of the tab 118 is visible, and thus the web page 120 is visible. In some examples, depending on the chosen configuration, one or more tabs 118 may be active at a time. For example, FIG. 1 illustrates a browser configuration in one tab 118b is active and takes up the entire display region of the browser. In some examples, the title bar 124 of each tab 118 is visible regardless of whether the tab 118 is active or not. The title bars 124 may vary in size and/or be resized dynamically to accommodate the number of tabs in the available space. In some examples, if the number of tabs exceeds a threshold number, some title bars 124 may be out of view and can be accessed or brought into view via scrolling or similar mechanisms.

Various user inputs may be applied to the title bar 124 of a tab 118 in order to manipulate various aspects of the tab 118. For example, a tab 118 can be made active when a user input such as a click is applied to the title bar 124, thus surfacing the content region 122 of the tab 118. In some examples, the title bar 124 serves as a handle for the tab 118 and can be dragged to various locations, such as to rearrange the order of the tabs 118 within a browser application window 114, move a tab 118 between browser application windows 114, or to initiate a new browser application window 114. In some examples, a cursor 128 is utilized as an interfacing element that translates user action and intent into a machine recognizable input. The cursor may be controlled via a mouse or touchpad or via other techniques such as voice command, gaze tracking, among others. The browser 112 and tabs 118 may be manipulated using other types of inputs other than cursor-based inputs such as hotkeys, touch, touchless gestures, among others.

FIG. 1A depicts the desktop 100 during which an input indicative of an intent to move or configure browser tab 118b is received. In this example, the title bar 124 of the tab 118b is clicked and/or dragged. This triggers one or more graphical action elements 130a, 130b, 130c, 130d (collectively referred to as graphical action elements or simply graphical elements 130) representing respective browser actions to be displayed or otherwise presented. The graphical elements 130 represent browser actions that can be applied to the web page 120 of the tab 118b. In some examples, the browser actions that can be applied may be based at least in part of the type of content presented in the web page. Example content types include audio media, video media, messaging application, social media application, e-commerce application, and text. In some examples, a web page may include more than one type of content. The type of content on a web page may be identified based on contextual information of the web page. Example browser actions may include sending a webpage associated with the tab to another device (represented by graphical element 130a), casting at least a portion of the content onto another device (represented by graphical element 130b), displaying the tab in a side-by-side view within the browser (represented by graphical element 130c), displaying at least a portion of the content in a container outside of the browser (represented by graphical element 130d), displaying at least a portion of the content in a mini multimedia player outside of the browser, providing an audio control interface, among others.

The contextual information of the web page in a tab 118, such as the type(s) of content the web page 120 contains, may inform which browser actions can be applied or may be useful. For example, if the web page 120 includes video media, moving the video into a mini multimedia player may be an applicable and useful configuration option and thus provided as a browser action. If the web page 120 does not include video media, a mini multimedia player may not be applicable to the web page and thus would not be provided as a browser action. In some examples, there are default browser actions or configurations that are applicable to all web pages 120.

In some examples, other factors in addition to contextual information of the web page, such as the current state or configuration of the tab 118 or web page 120, may be used to determine the browser actions to present. For example, if the tab 118 or web page 120 is already in a particular configuration as a result of a browser action, then that configuration or browser action may not be presented as an option. In some examples, historical data of selected browser actions may be utilized in determining which browser actions to present. The historical data may include local data that is based on the current user's own past behaviors such as which browser actions and/or configuration are frequently selected. The frequently selected actions and/or configurations may also be specific to different content types, website, etc. In some examples, global historical data may be used, which includes past behaviors of many users, to determine general preferences across users.

In the example illustrated in FIG. 1A, the web page 120 includes text content, and does not include any video media, audio media, e-commerce or messaging applications. Thus, the presented graphical elements 130a are those that represent browser actions that are applicable to a text-based web page 120, including actions for sending a webpage associated with the tab to another device (represented by graphical element 130a), casting at least a portion of the content onto another device (represented by graphical element 130b), displaying the tab in a side-by-side view within the browser (represented by graphical element 130c), displaying at least a portion of the content in a container outside of the browser (represented by graphical element 130d). In some examples, various other browser actions other than those used herein as examples may be applicable and presented via respective graphical elements 130.

FIG. 1B depicts the desktop 100 during which an input indicative of interest in graphical element 130c is received. FIG. 1B follows the display of FIG. 1A, in which a click or drag of a tab 118b is received, and shows the tab 118b (or a representation of tab 118b) being dragged to graphical element 130c, which represents a side-by-side browser tab configuration. In some examples, a preview 132c of the configuration is shown to inform the user of the effects of selecting the graphical element 130c and corresponding browser action. In some examples, the preview 132c may be active as long as the cursor 128 hovers over the corresponding graphical element 130c.

FIG. 1C depicts the desktop 100 after which an input indicative of a selection of graphical element 130c is received. The input indicative of a selection may include releasing the drag of the browser tab 118b over graphical element 130c. Since graphical element 130c represents displaying the tab 118b in a side-by-side view within the browser application window 114, the tab 118b is configured in a side-by-side configuration 134 when the graphical element 130c is selected, as illustrated. In some examples, a graphical element 130 such as graphical element 130c may include sub-elements that represent variations of a browser action or configuration. For example, graphical element 130c may include a right-side element and a left-side element that represent respective sides of the side-by-side view. In such an example, FIG. 1C illustrates an instance in which the right-side element is selected and thus the tab 118b is configured on the right side of the side-by-side view.

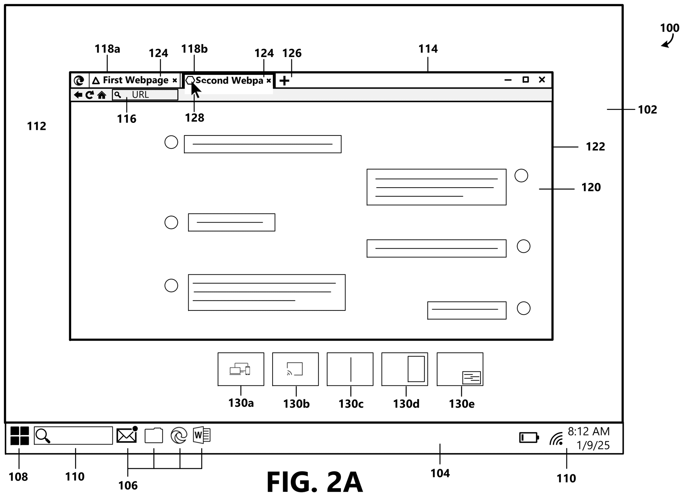

In the example illustrated in FIG. 2A, the web page 120 includes a messaging application. Thus, the presented graphical elements 130a are those that represent browser actions that are applicable to a web page 120 with a messaging application, including actions for sending a webpage associated with the tab to another device (represented by graphical element 130a), casting at least a portion of the content onto another device (represented by graphical element 130b), displaying the tab in a side-by-side view within the browser (represented by graphical element 130c), displaying at least a portion of the content in a container outside of the browser (represented by graphical element 130d), or displaying at least a portion of the content (e.g., the chat) in a designated chat box (represented by graphical element 130e). In some examples, the chat box option 130e may only appear as an option when it is determined that the web page 120 includes a messaging component. In different examples, the computing or operating system may include different types of available browser actions and display options that may be presented as options depending on the type of content present in the web page 120. In some examples, various other browser actions other than those used herein as examples may be applicable and presented via respective graphical elements 130.

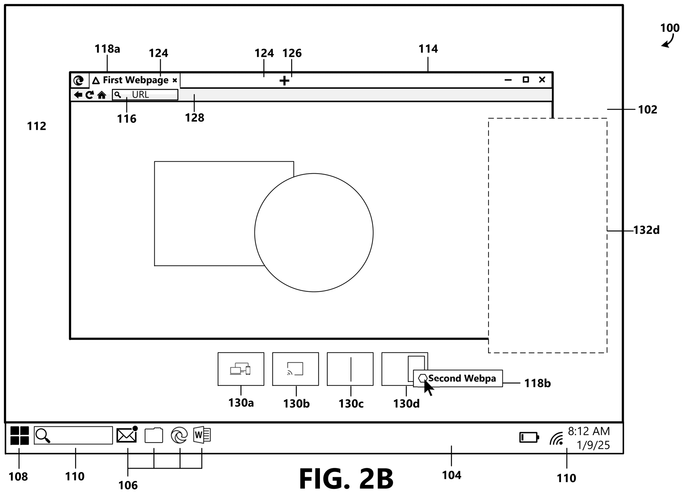

FIG. 2B depicts the desktop 100 during which an input indicative of interest in graphical element 130d is received. FIG. 2B follows the display of FIG. 2A, in which a click or drag of a tab 118b is received, and shows the tab 118b (or a representation of tab 118b) being dragged to graphical element 130d, which represents displaying at least a portion of the content in a container outside of the browser 112. In some examples, a preview 132d of the configuration is shown to inform the user of the effects of selecting the graphical element 130 and corresponding browser action. In some examples, the preview 132d may be active as long as the cursor 128 hovers over the corresponding graphical element 130d.

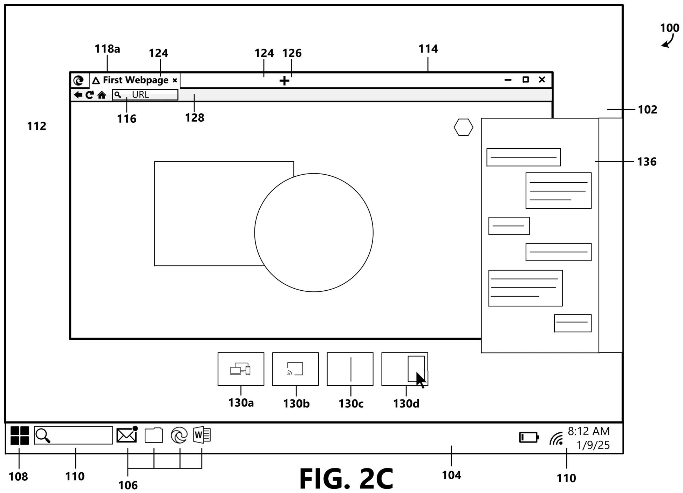

FIG. 2C depicts the desktop 100 after which an input indicative of a selection of graphical element 130d is received. The input indicative of a selection may include releasing the drag of the browser tab 118b over graphical element 130d. Since graphical element 130d represents displaying contents of the web page in a container outside of the browser application window 114, at least a portion of the contents of the web page is displayed in a container 136 outside of the browser application window 114 when the graphical element 130d is selected, as illustrated. In some examples, the contents of the web page may be rearranged or compacted for the layout and space of the container 136. In some examples, the container 136 may be resized, either automatically or manually, after contents of the webpage are displayed in the container 136, such as to better accommodate the content. In some examples, the container 136 is a widget container with various different applications held therein. In some examples, any web page can be made into a widget by selecting graphical element 130d. In some examples, the container 136 is specifically for messaging applications.

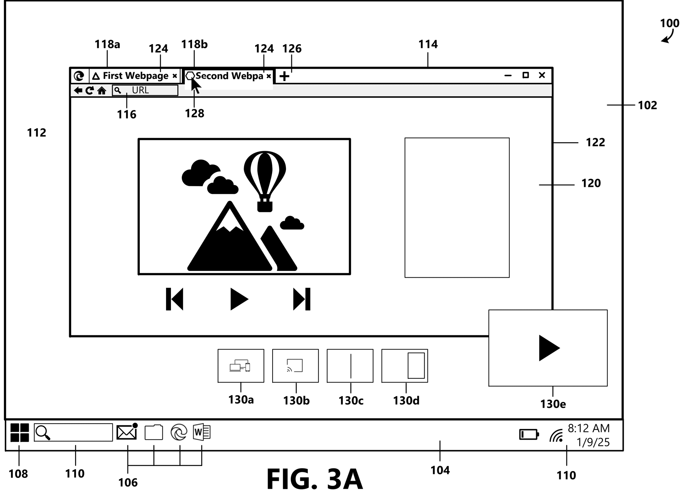

In the example illustrated in FIG. 3A, the web page 120 includes video media. Thus, the presented graphical elements 130 are those that represent browser actions that are applicable to a web page 120 with a video media, including actions for sending a webpage associated with the tab to another device (represented by graphical element 130a), casting at least a portion of the content onto another device (represented by graphical element 130b), displaying the tab in a side-by-side view within the browser (represented by graphical element 130c), and displaying at least a portion of the content in a container outside of the browser (represented by graphical element 130d). Additionally, the graphical elements 130 include graphical element 130e for playing the video in a mini multimedia player on the desktop 100. In some examples, graphical element 130e is only shown when the web page includes video media.

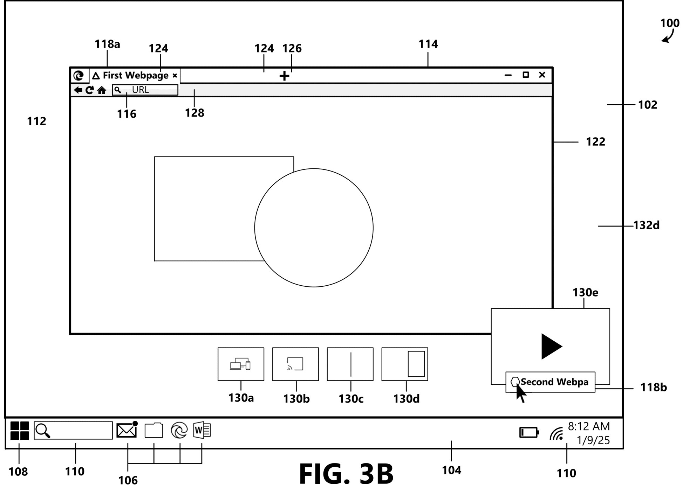

FIG. 3B depicts the desktop 100 during which an input indicative of interest in graphical element 130e is received. FIG. 3B follows the display of FIG. 3A, in which a click or drag of a tab 118b is received, and shows the tab 118b (or a representation of tab 118) being dragged to graphical element 130e, which represents playing the video in a mini multimedia player on the desktop 100 independently of the browser application window 114.

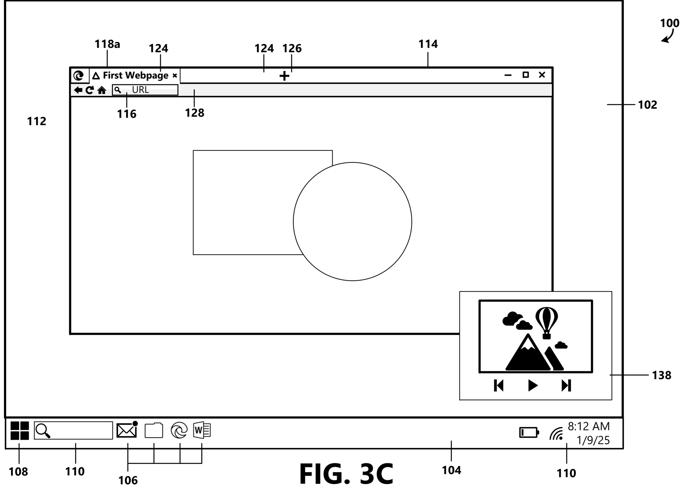

FIG. 3C depicts the desktop 100 after which an input indicative of a selection of graphical element 130e is received. The input indicative of a selection may include releasing the drag of the browser tab 118 over graphical element 130e. When graphical element 130e is selected, the video in the web page is displayed in a mini multimedia player 138. In some examples, the contents of the web page may be rearranged or compacted for the layout and space of the container 136 or mini multimedia player 138. For example, content extraneous to the video and basic controls may not be shown in the mini multimedia player 138. In some examples, other specialized browser actions and configurations may be provided based on the web page 120 having corresponding content. For example, if the web page 120 includes audio media, a specialized audio player may be provided as an option. In some examples, the mini multimedia player 138 may be applicable to both video media and audio media.

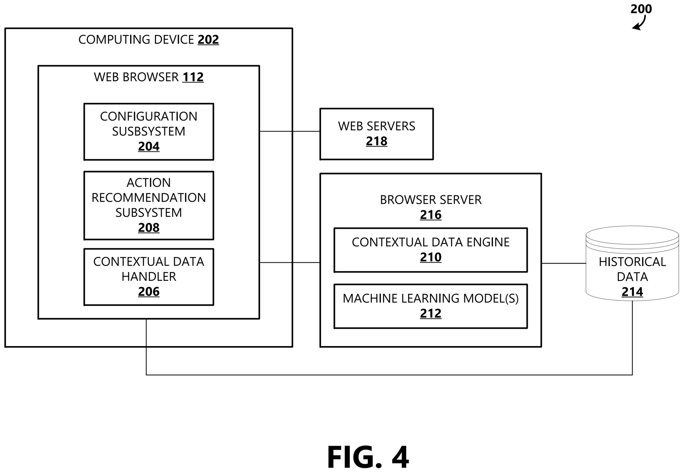

FIG. 4 depicts an example system 200 for implementing a framework for providing context-aware browser action options, in accordance with one or more examples. The system 200 includes a computing device 202 such as a personal computer or mobile device that includes a web browser 112. The computing device 202 may communicate with web servers 218 which provide applications, services, data, etc. to the web browser 112 and/or computing device 202. The web browser 112 is installed on the computing device 202 and includes web browsing and display functionality that controls the retrieval and display of web pages 120 from remote sources, such as web servers 218. For instance, when a web page 120 is requested via a URL, the web browsing and display functionality receives the web page content from a web server 218 and displays the content in the web browser 112. The computing device 202 may also communicate with a browser server 216. In some examples, the browser server provides updates and services that support features and functionalities of the web browser for a plurality of computing device 202.

The web browser 112 further includes a configuration subsystem 204 which manages how content from web pages 120 is displayed or otherwise presented. In some examples, content from a web page 120 may be presented in various ways other than in a default browser tab 118. For example, content from a web page 120 may be presented in a side-by-side or split browser view in which two web pages are displayed side by side within the same browser application window 114, such as illustrated in FIG. 1C. Content may also be displayed in a separate container 136 outside of the main browser application window 114, such as illustrated in FIG. 2C. The container may be moved around and manipulated separately from the browser application window 114, such as being docked to a region of the workspace 102, maintained in view, generating desktop alerts, etc. Video content of a web page 120 may be displayed in a mini multimedia player 138 such as illustrated in FIG. 3C. In some examples, the external container 136 and the mini multimedia player 138, among other browser display configurations, are considered components of the same browser instance as the main browser application window 114 and managed by the configuration subsystem 204 of the web browser 112.

The web browser 112 further includes an action recommendation subsystem 208, which manages the recommendation and presentation of certain browser actions to the user. Browser actions refer to various actions that can be taken with respect to a web page 120 open in the browser 112. For example, displaying content in a web page in any of the available configurations, such as those mentioned above, may be considered browser actions. Browser actions may also include sending a web page 120 to another device or casting the contents of the web page 120 onto another device, among other possible actions. In some examples, the action recommendation subsystem 208 determines which actions can be applied to a certain web page 120 and presents those as options to the user. In some examples, the action recommendation subsystem 208 also determines which actions the user may be most interested in or most likely to select. The action recommendation subsystem 208 may receive information or instruction from the browser server 216 to make these determinations. For example, the action recommendation subsystem 208 may determine which actions to present based on the types of content present on a web page 120, such as video media, audio media, text, e-commerce content, messaging applications, among others. In some examples, the action recommendation subsystem 208 presents the recommended actions to the user via the graphical elements 130 and generates previews of the actions where applicable. In some examples, the action recommendation subsystem 208 utilizes listener functions of the web browser 112 to detect inputs that trigger various steps of providing context-aware browser action options.

The web browser 112 further includes a contextual data handler 206, which extracts and manages different types of contextual data associated with the web pages 120 that are displayed by the web browser 112 and used by the action recommendation subsystem 208. The contextual data handler 206 may work together with a contextual data engine 210 of the browser server 216 such that some tasks are performed locally by the contextual data handler 206 and some tasks are performed remotely by the contextual data engine 210. In some examples, the contextual data handler 206 facilitates the extraction of information from the web pages and the contextual data engine performs analysis of the information to interpret the information and generate various results, such as the content types present on the webpage, content categories, entity data, and other information.

The contextual data handler 206 and/or contextual data engine 210 may extract different types of data from different types of web pages. For example, the contextual data handler 206 may extract a first type of context from a first web page, and a further example contextual data handler 206 extracts a second type of context from a second web page. In some examples, the contextual data handler 206 and/or contextual data engine 210 may utilize algorithms and machine learning (ML) models 212 to determine what type of content is displayed on the web page 120 and determine what type of data to extract or interpret. The ML models may be trained to determine, or predict, the types of content that are present on a web page 120 based on various data or attributes that are associated with the content of the web page 120. In some examples, the ML models may include classifier models (e.g., Naive Bayes, decision trees, random forests, K-nearest neighbors algorithms) that classify the contents of a web page into one or more content types.

In some examples, text corresponding to entities is extracted from content displayed in a web page 120 in the web browser 112 and categorized and/or classified according to a ML model and/or through named entity recognition (NER) algorithms. In some examples, the ML models include a multimodal ML model, which can process and integrate information from multiple modalities or types of data, such as text, images, audio, video, among others. In some examples, the ML models include Open Neural Network Exchange (ONNX) ML models or the like. For instance, entities are extracted from the text, images, code, and other content of the web page 120. The extracted entities and/or their classifications/categorizations are a type of context. Other context types may be based on user segmentation, browser history, cookies, regular expression (regex) queries, image content recognizers (e.g., objects recognized in images), video context recognizers (e.g., text from subtitles, objects recognized in video), and/or other data extracted from web page content. It should be noted that web page content can refer to any content or data associated with the web page 120 that the web browser 112 has access to, including content or data that is not displayed to the user, such as metadata, embedded tags, attributes, links, resources, APIs, among others.

In some examples, the browser server 216 and/or the web browser 112 may access historical data 214 for the current user account or a large number of user accounts to further refine the recommended browser actions. For example, the historical data 214 may include local data that is based on the current user's own past behaviors such as which browser actions and/or configuration are frequently selected. The frequently selected actions and/or configurations may also be specific to different content types, website, etc. In some examples, global historical data may be used, which includes past behaviors of many users, to determine general preferences across users. ML models may also be used in selecting the recommended browser actions. For example, the historical data 214 of the current user and/or a large number of users may be used to train such an ML model. The training data may include a selected browser action and the associated context of the selection, such as user profile data, current or recent activity of the computer (e.g., open applications, recent actions), contextual data of the web page content, contextual data associated with other browser tabs, among others. Thus, the ML model can predict/recommend browser actions in real time based on the current context, in which the current context is the input to the ML model and the recommended browser actions are the output.

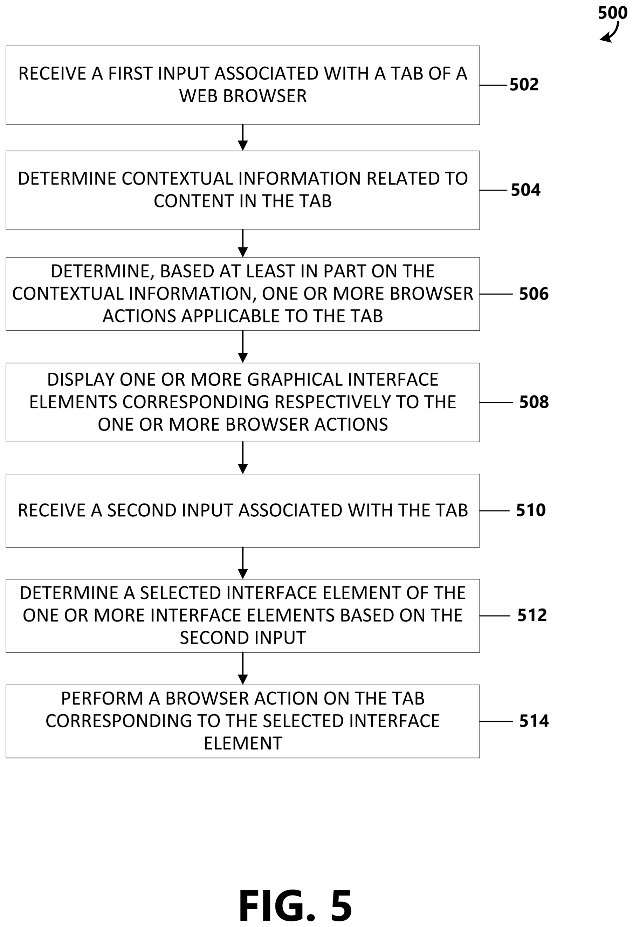

FIG. 5 depicts an example process 500 for providing context-aware browser action options. The operations of process 500 are performed by a computing device, such as a computing device 202 hosting a web browser 112 or a remote server providing the framework. It should be noted that the operations in FIGS. 5-7 may be performed in any order and/or some of the operations may be performed concurrently.

At operation 502, a first input associated with an open tab 118 of a web browser 112 is received. In some examples, the first input is indicative of an intent to move, arrange, or otherwise reconfigure the tab 118 with respect to the browser 112. For example, the first input may include a hover, a click, or a drag action on the tab 118. In some examples, the hover, click, or drag may be applied to the title bar 124 of the tab 118. The first input may be applied to any open tab 118, not limited to the active tab 118. The first input may serve as a trigger for initiating the process 500 of providing context-aware browser tab configuration options. In some examples, process 500 and the techniques of the present disclosure may be initiated based on detecting or sensing other types of triggers.

At operation 504, contextual information related to the content (e.g., web page) in the tab 118 is determined. The contextual information may include various other types of information. The contextual information may be determined in a number of different ways. For example, in some examples, the contextual information may be received from the contextual data engine 210. Certain content of a web page may be analyzed by an entity extraction engine or service to identify aspects of the web page such as topic, content type, entities within the content and attributes of such entities, among others. In some examples, some of the contextual information may be based on tags, keywords, resources, links, etc., identified in the HTML of the web page. Example content types include audio media, video media, messaging application, social media application, e-commerce application, and text. In some examples, a web page may include more than one type of content.

At operation 506, one or more browser actions applicable to the tab are determined based at least in part on the contextual information. In some examples, the one or more browser actions include displaying the tab 118 in a side-by-side view within the browser, displaying at least a portion of the content in a container outside of the browser, displaying at least a portion of the content in a mini multimedia player outside of the browser, providing an audio control interface, sending a web page 120 of with the tab 118 to a first device, casting at least a portion of the content onto a second device, among others. The contextual information of the web page 120 in a tab 118, such as the type(s) of content the web page 120 contains, may inform which browser actions can be applied or may be useful. For example, if the web page includes video media, moving the video into a mini multimedia player may be an applicable and useful configuration option and thus provided as a browser action. If the web page 120 does not include video media, a mini multimedia player 138 may not be applicable to the web page 120 and thus would not be provided as a browser action.

In some examples, there are default browser actions or configurations that are applicable to all web pages. In some examples, other factors in addition to contextual information of the web page 120 may be used to determine the browser actions to present, such as the current state or configuration of the tab or web page 120. For example, if the tab 118 or web page 120 is already in a particular configuration as a result of a browser action, then that configuration or browser action may not be presented as an option. In some examples, historical data of selected browser actions may be utilized in determining which browser actions to present. The historical data may include local data that is based on the current user's own past behaviors such as which browser actions and/or configuration are frequently selected. The frequently selected actions and/or configurations may also be specific to different content types, website, etc. In some examples, global historical data may be used, which includes past behaviors of many users, to determine general preferences across users.

At operation 508, one or more graphical action elements 130 corresponding to the one or more browser actions are displayed, as illustrated in FIGS. 1A-3C. In some examples, the graphical action elements 130 are shown upon receiving the first input such that the browser actions are presented to the user visually. The graphical action elements 130 may be displayed on the desktop 100 in various positions and arrangements. In some examples, the graphical action elements 130 may be displayed as an overlay. The graphical action elements 130 may be displayed inside the browser application window 114 or outside the browser application window 114. The graphical action elements 130 may be displayed within the workspace 102 of the desktop 100 or in the taskbar 104. In some examples, different graphical action elements 130 may be displayed in different regions of the desktop 100.

At operation 510, a second input associated with the tab 118 and a selected graphical action element 130 is received. In some examples, the second input includes moving the tab 118 or a representation of the tab 118 to hover over or be within a proximity of a selected action element. In some examples, the second input includes a release of a drag or hover over the selected graphical action element 130, thus indicating selection of the graphical action element 130. At operation 512, the selected action element of the one or more action elements is determined based on the second input. At operation 514, a browser action corresponding to the browser action is performed on the tab. In some examples, a transient interface element is displayed as a preview of the browser action before the browser action is performed.

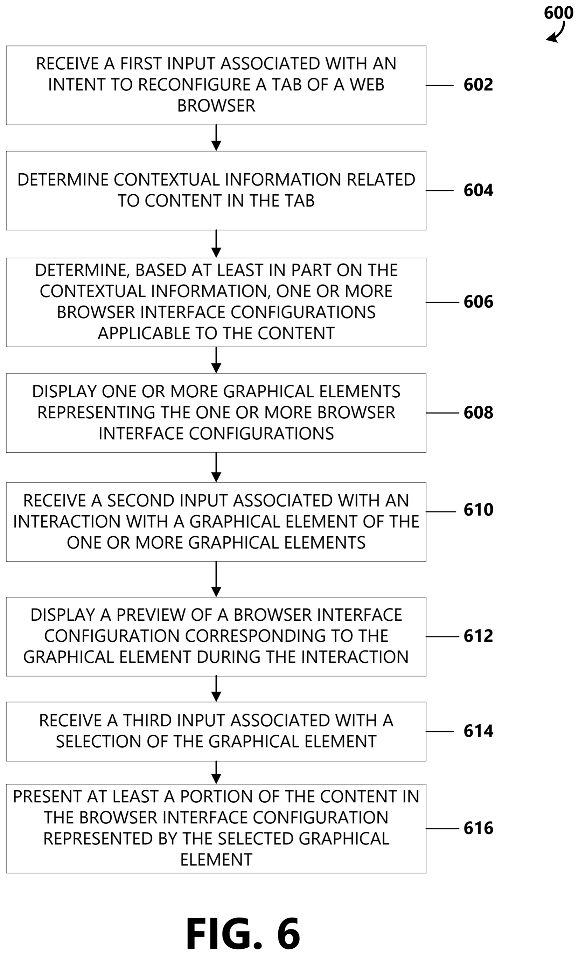

FIG. 6 illustrates a process 600 for providing context-aware browser tab configuration options, in accordance with one or more examples. At operation 602, a first input associated with an intent to reconfigure a tab 118 of a web browser is received. In some examples, the first input includes a drag input applied to the tab 118. At operation 604, contextual information related to the content in the tab 118 is determined. In some examples, the contextual information includes a content type of a plurality of content types including audio, video, messaging, social media, e-commerce, and text.

At operation 606, one or more browser interface configurations that are applicable to the content are determined based at least in part on the context information. In some examples, the one or more browser interface configurations include a side-by-side view within the browser, a container outside of a main portion of the browser, a video player, an audio player, sending a webpage associated with the tab to a first device, casting at least a portion of the content onto a second device. At operation 608, one or more graphical elements representing the one or more browser interface configurations are displayed.

At operation 610, a second input associated with an interaction with a graphical element of the one or more graphical elements is received. In some examples, the second input includes a dragging of the tab 118 over or within a threshold proximity of the graphical element. At operation 612, a preview of a browser interface configuration corresponding to the graphical element during the interaction is displayed. The preview may include an indication of a region of the browser application window 114 or desktop 100 in which the content will be displayed as well as an approximate display size. In some examples, the preview does not contain the actual content and may be blank or contain a placeholder. In some examples, the preview does include the actual content of the web page 120 that will be displayed if the configuration is selected. In some examples, the preview is transient and only appears when the second input is active (e.g., when the cursor hover over or within a threshold proximity of the graphical element).

At operation 614, a third input associated with a selection of the graphical element is received. In some examples, the third input includes a release of the drag action over or within the threshold proximity of the graphical element. Thus, the corresponding browser interface configuration is selected and applied to the web page 120. At operation 616, at least a portion of the content is presented in the selected browser interface configuration. FIGS. 1C, 2C, and 3C illustrate examples of various browser interface configurations.

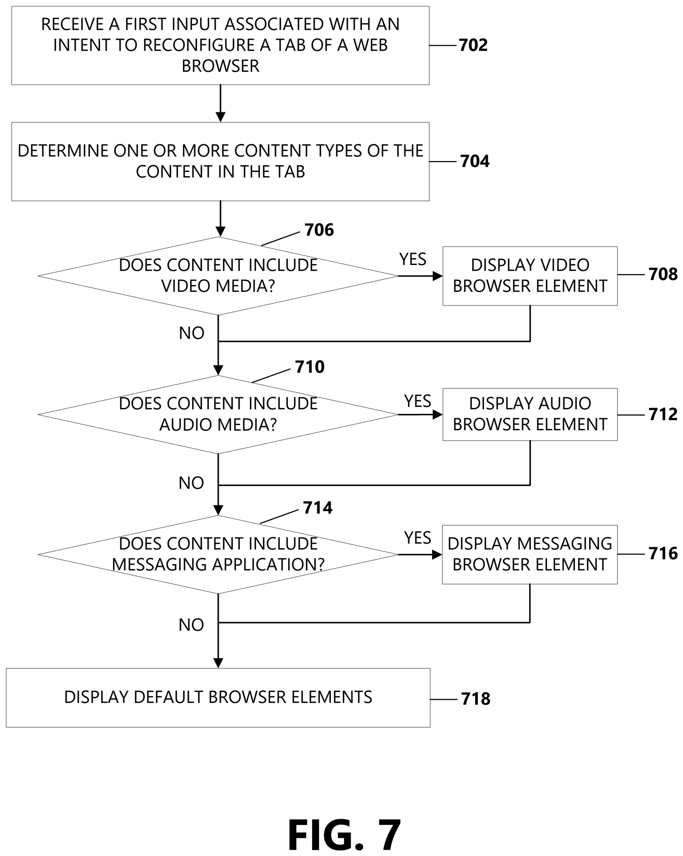

FIG. 7 illustrates a process 700 of providing context-aware browser tab configuration options, in accordance with one or more examples. At operation 702, a first input associated with an intent to reconfigure a tab 118 of a web browser 112 is received. In some examples, the first input is indicative of an intent to move, arrange, or otherwise reconfigure the tab 118 with respect to the browser 112. For example, the first input may include a hover, a click, or a drag action on the tab 118. In some examples, the hover, click, or drag may be applied to the title bar 124 of the tab 118. The first input may be applied to any open tab 118, not limited to the active tab 118.

At operation 704, one or more content types of the content in the tab 118 are determined. In some examples, certain tab configurations are only applicable to certain type of content. Example content types include audio media, video media, messaging application, social media application, e-commerce application, and text. In some examples, a web page may include more than one type of content.

At operation 706, it is determined whether the content includes video media. If the content does not include video media, the process 700 proceeds to operation 710. If the content does include video media, the process 700 proceeds to operation 708. At operation 708, a video player browser element is displayed as a selectable option for displaying the content. The process 700 then proceeds to operation 710.

At operation 710, it is determined whether the content includes audio media. If the content does not include audio media, the process 700 proceeds to operation 714. If the content does include audio media, the process 700 proceeds to operation 712. At operation 712, an audio player browser element is displayed as a selectable option. The process 700 then proceeds to operation 714.

At operation 714, it is determined whether the content includes a messaging application. If the content does not include a messaging application, the process 700 proceeds to operation 718. If the content does include a messaging application, the process 700 proceeds to operation 716. At operation 716, a messaging application element is displayed as a selectable option for displaying the content. The process 700 then proceeds to operation 718.

At operation 718, default browser elements are displayed along with other browser elements that were determined to be applicable based on the content types in the content of the browser tab 118.

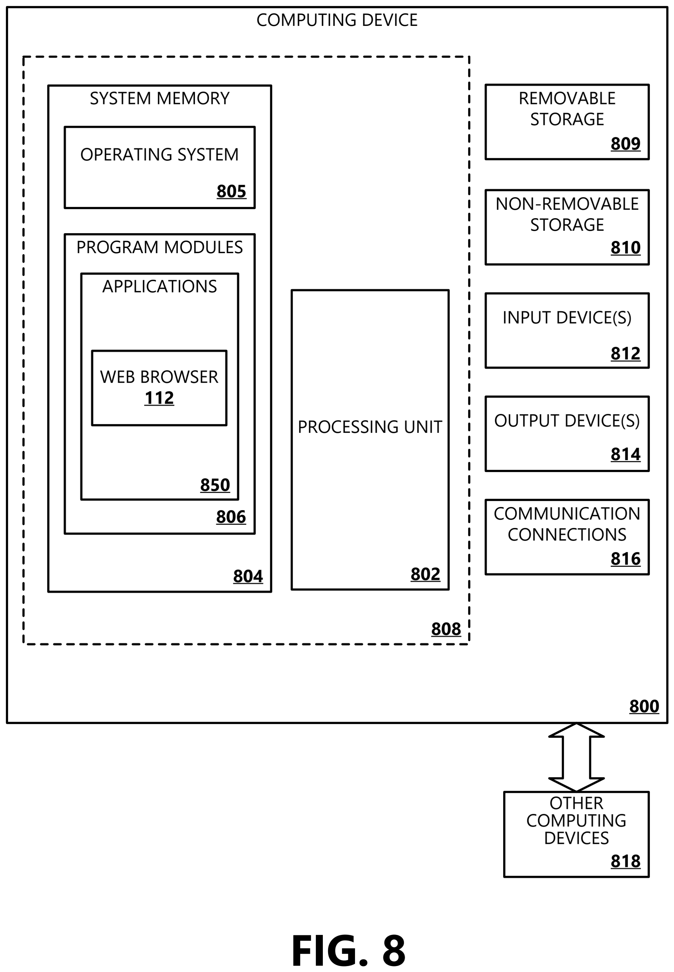

FIG. 8 and the associated description provide a discussion of a variety of operating environments in which examples of the invention may be practiced. However, the devices and systems illustrated and discussed with respect to FIG. 8 is for purposes of example and illustration and is not limiting of a vast number of computing device configurations that may be utilized for practicing aspects of the invention, described herein. FIG. 8 is a block diagram illustrating physical components (i.e., hardware) of a computing device 800 with which examples of the present disclosure may be practiced. The computing device components described below may be suitable for a client device running the web browser discussed above. In a basic configuration, the computing device 800 may include at least one processing unit 802 and a system memory 804. The processing unit(s) (e.g., processors) may be referred to as a processing system. Depending on the configuration and type of computing device, the system memory 804 may comprise, but is not limited to, volatile storage (e.g., random access memory), non-volatile storage (e.g., read-only memory), flash memory, or any combination of such memories. The system memory 804 may include an operating system 805 and one or more program modules 806 suitable for running software applications 850 such as a web browser 112 and one or more browser and/or non-browser desktop applications.

The operating system 805, for example, may be suitable for controlling the operation of the computing device 800. Furthermore, aspects of the invention may be practiced in conjunction with a graphics library, other operating systems, or any other application program and is not limited to any particular application or system. This basic configuration is illustrated in FIG. 8 by those components within a dashed line 808. The computing device 800 may have additional features or functionality. For example, the computing device 800 may also include additional data storage devices (removable and/or non-removable) such as, for example, magnetic disks, optical disks, or tape. Such additional storage is illustrated in FIG. 8 by a removable storage device 809 and a non-removable storage device 810.

As stated above, a number of program modules and data files may be stored in the system memory 804. While executing on the processing unit 802, the program modules 806 may perform processes including, but not limited to, one or more of the operations of the methods illustrated in FIGS. 5-7. Other program modules that may be used in accordance with examples of the present invention and may include applications such as electronic mail and contacts applications, word processing applications, spreadsheet applications, database applications, slide presentation applications, drawing or computer-aided application programs, etc.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in FIG. 8 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to generating suggested queries, may be operated via application-specific logic integrated with other components of the computing device 800 on the single integrated circuit (chip). Examples of the present disclosure may also be practiced using other technologies capable of performing logical operations such as, for example, AND, OR, and NOT, including but not limited to mechanical, optical, fluidic, and quantum technologies.

The computing device 800 may also have one or more input device(s) 812 such as a keyboard, a mouse, a pen, a sound input device, a touch input device, etc. The output device(s) 814 such as a display, speakers, a printer, etc. may also be included. The aforementioned devices are examples and others may be used. The computing device 800 may include one or more communication connections 816 allowing communications with other computing devices 818. Examples of suitable communication connections 816 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 804, the removable storage device 809, and the non-removable storage device 810 are all computer storage media examples (i.e., memory storage.) Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 800. Any such computer storage media may be part of the computing device 800. Computer storage media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless

In one or more aspects of the present disclosure, a system for providing graphical browser actions comprises a processing system; and memory storing instructions that, when executed by the processing system, cause the system to: receive a first input associated with a tab of a web browser; determine contextual information related to content in the tab; determine, based at least in part on the contextual information, one or more browser actions applicable to the tab; display one or more action elements corresponding respectively to the one or more actions, the one or more action elements providing graphical indications of the one or more browser actions; receive a second input associated with the tab; determine a selected action element of the one or more action elements based on the second input; and perform a browser action on the tab corresponding to the selected action element.

In some examples, the first input is indicative of an intent to move or arrange the tab with respect to the web browser.

In some examples, the second input includes moving the tab or a representation of the tab to hover over or be within a proximity of the selected action element.

In some examples, the tab is associated with a tab state and the one or more browser actions are based at least in part on the tab state.

In some examples, the contextual information includes a content type of a plurality of content types including audio, video, messaging, social media, e-commerce, and text.

In some examples, the one or more browser actions include displaying the tab in a side-by-side view within the browser, displaying at least a portion of the content in a container outside of the browser, displaying at least a portion of the content in a mini multimedia player outside of the browser, providing an audio control interface, sending a webpage associated with the tab to a first device, casting at least a portion of the content onto a second device.

In some examples, the instructions further cause the system to display a transient interface element as a preview of the browser action before performing the browser action.

In one or more aspects of the present disclosure, a method for providing graphical browser actions comprises receiving a first input associated with a tab of a web browser; determining contextual information related to content in the tab; determining, based at least in part on the contextual information, one or more browser actions applicable to the tab; displaying one or more action elements corresponding respectively to the one or more actions, the one or more action elements providing graphical indications of the one or more browser actions; receiving a second input associated with the tab; determine a selected action element of the one or more action elements based on the second input; and performing a browser action on the tab corresponding to the selected action element.

In some examples, the first input is indicative of an intent to move or arrange the tab with respect to the web browser.

In some examples, the second input includes moving the tab or a representation of the tab to hover over or be within a proximity of the selected action element.

In some examples, the tab is associated with a tab state and the one or more browser actions are based at least in part on the tab state.

In some examples, the contextual information includes a content type of a plurality of content types including audio, video, messaging, social media, e-commerce, and text.

In some examples, the one or more browser actions include displaying the tab in a side-by-side view within the browser, displaying at least a portion of the content in a container outside of the browser, displaying at least a portion of the content in a mini multimedia player outside of the browser, providing an audio control interface, sending a webpage associated with the tab to a first device, casting at least a portion of the content onto a second device.

In some examples, the method further comprises displaying a transient interface element as a preview of the browser action before performing the browser action.

In one or more aspects of the present disclosure, a system for providing browser configurations recommendations, the system comprising: a processing system; and memory storing instructions that, when executed by the processing system, cause the system to: receive a first input associated with an intent to reconfigure a tab of a web browser; determine contextual information related to content in the tab; determine, based at least in part on the contextual information, one or more browser interface configurations applicable to the content; display one or more graphical elements corresponding respectively to the one or more browser interface configurations; receive a second input associated with an interaction with a graphical element of the one or more graphical elements; display a preview of a browser interface configuration corresponding to the graphical element during the interaction; receive a third input associated with a selection of the graphical element; and present at least a portion of the content in the browser interface configuration.

In some examples, the one or more browser interface configurations include a side-by-side view within the browser, a container outside of a main portion of the browser, a video player, an audio player, sending a webpage associated with the tab to a first device, casting at least a portion of the content onto a second device.

In some examples, the contextual information includes a content type of a plurality of content types including audio, video, messaging, social media, e-commerce, and text.

In some examples, the instructions further cause the system to remove the one or more graphical elements from view.

In some examples, the first input includes a drag input applied to the tab, the second input includes a hover input over the graphical element, and the third input includes a release input of the tab over the graphical element.

In some examples, the one or more browser interface configurations are determined based at least in part on historical data associated with one or more user accounts.

Aspects of the present invention, for example, are described above with reference to block diagrams and/or operational illustrations of methods, systems, and computer program products according to aspects of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved. Further, as used herein and in the claims, the phrase "at least one of element A, element B, or element C" is intended to convey any of: element A, element B, element C, elements A and B, elements A and C, elements B and C, and elements A, B, and C.

The description and illustration of one or more examples provided in this application are not intended to limit or restrict the scope of the invention as claimed in any way. The aspects, examples, and details provided in this application are considered sufficient to convey possession and enable others to make and use the best mode of claimed invention. The claimed invention should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the spirit of the broader aspects of the general inventive concept embodied in this application that do not depart from the broader scope of the claimed invention.

This application claims priority to US 19/078,744 filed 13 March 2025 the entirety of which is hereby incorporated herein by reference for all purposes.

## Claims

1. A system for providing graphical browser actions, the system comprising:
a processing system; and
memory storing instructions that, when executed by the processing system, cause the system to:
receive (502) a first input associated with a tab of a web browser;
determine (504) contextual information related to content in the tab;
determine (506), based at least in part on the contextual information, one or more browser actions applicable to the tab;
display (508) one or more action elements corresponding respectively to the one or more actions, the one or more action elements providing graphical indications of the one or more browser actions;
receive (510) a second input associated with the tab;
determine (512) a selected action element of the one or more action elements based on the second input; and
perform (514) a browser action on the tab corresponding to the selected action element.

2. The system of claim 1, wherein the first input is indicative of an intent to move or arrange the tab with respect to the web browser.

3. The system of claim 1, wherein the second input includes moving the tab or a representation of the tab to hover over or be within a proximity of the selected action element.

4. The system of claim 1, wherein the tab is associated with a tab state and the one or more browser actions are based at least in part on the tab state.

5. The system of claim 1, wherein the contextual information includes a content type of a plurality of content types including audio, video, messaging, social media, e-commerce, and text.

6. The system of claim 1, wherein the one or more browser actions include displaying the tab in a side-by-side view within the browser, displaying at least a portion of the content in a container outside of the browser, displaying at least a portion of the content in a mini multimedia player outside of the browser, providing an audio control interface, sending a webpage associated with the tab to a first device, casting at least a portion of the content onto a second device.

7. The system of claim 1, wherein the instructions further cause the system to:
display a transient interface element as a preview of the browser action before performing the browser action.

8. A method for providing graphical browser actions, comprising:
receiving (502) a first input associated with a tab of a web browser;
determining (504) contextual information related to content in the tab;
determining (506), based at least in part on the contextual information, one or more browser actions applicable to the tab;
displaying (508) one or more action elements corresponding respectively to the one or more actions, the one or more action elements providing graphical indications of the one or more browser actions;
receiving (510) a second input associated with the tab;
determine (512) a selected action element of the one or more action elements based on the second input; and
performing (514) a browser action on the tab corresponding to the selected action element.

9. The method of claim 8, wherein at least one of the following is provided:
(i) the first input is indicative of an intent to move or arrange the tab with respect to the web browser;
(ii) the second input includes moving the tab or a representation of the tab to hover over or be within a proximity of the selected action element;
(iii) the tab is associated with a tab state and the one or more browser actions are based at least in part on the tab state;
(iv) the contextual information includes a content type of a plurality of content types including audio, video, messaging, social media, e-commerce, and text.

10. The method of claim 8, wherein the one or more browser actions include displaying the tab in a side-by-side view within the browser, displaying at least a portion of the content in a container outside of the browser, displaying at least a portion of the content in a mini multimedia player outside of the browser, providing an audio control interface, sending a webpage associated with the tab to a first device, casting at least a portion of the content onto a second device.

11. The method of claim 8, further comprising:
displaying a transient interface element as a preview of the browser action before performing the browser action.

12. A system for providing browser configurations recommendations, the system comprising:
a processing system; and
memory storing instructions that, when executed by the processing system, cause the system to:
receive (602) a first input associated with an intent to reconfigure a tab of a web browser;
determine (604) contextual information related to content in the tab;
determine (606), based at least in part on the contextual information, one or more browser interface configurations applicable to the content;
display (608) one or more graphical elements corresponding respectively to the one or more browser interface configurations;
receive (610) a second input associated with an interaction with a graphical element of the one or more graphical elements;
display (612) a preview of a browser interface configuration corresponding to the graphical element during the interaction;
receive (614) a third input associated with a selection of the graphical element; and
present (616) at least a portion of the content in the browser interface configuration.

13. The system of claim 12, wherein at least one of the following is provided:
(i) the one or more browser interface configurations include a side-by-side view within the browser, a container outside of a main portion of the browser, a video player, an audio player, sending a webpage associated with the tab to a first device, casting at least a portion of the content onto a second device;
(ii) the contextual information includes a content type of a plurality of content types including audio, video, messaging, social media, e-commerce, and text;
(iii) the instructions further cause the system to:
remove the one or more graphical elements from view.

14. The system of claim 12, wherein the first input includes a drag input applied to the tab,
the second input includes a hover input over the graphical element, and the third input includes a release input of the tab over the graphical element.

15. The system of claim 12, wherein the one or more browser interface configurations are determined based at least in part on historical data associated with one or more user accounts
